# EUROPEAN PATENT SPECIFICATION

(11) **EP 0 419 022 B1**
(45) Date of publication and mention of the grant of the patent: **03.07.1996**
(21) Application number: 90308589.2
(22) Date of filing: 03.08.1990
(51) Int. Cl.: G11B 33/12, G11B 25/04

(54) **Disk storage apparatus**
Plattenspeichergerät
Dispositif de mémoire à disques

(30) Priority: 19.09.1989 US 409495
(43) Date of publication of application: 27.03.1991
(73) Proprietor: International Business Machines Corporation, Armonk, N.Y. 10504 (US)
(72) Inventor: Bajorek, Christopher Henry, Rochester, Minnesota 55904 (US); Glaser, Thomas William, Rochester, Minnesota 55902 (US); Greenberg, Richard, Rochester, Minnesota 55904 (US); Neubauer, Jerry Lee, Stewartville, Minnesota 55976 (US); Reidenbach, John Ralph, Rochester, Minnesota 55901 (US)
(74) Representative: Burt, Roger James, Dr.

(56) References cited:
- EP-A- 0 204 299
- EP-A- 0 253 626
- EP-A- 0 298 748
- US-A- 4 825 316
- PATENT ABSTRACTS OF JAPAN vol. 12, no. 451 (P-791)28 November 1988 & JP-A-63173201
- PATENT ABSTRACTS OF JAPAN vol. 13, no. 353 (P-913)8 August 1989 & JP-A-01 112 586

## Description

### BACKGROUND OF THE INVENTION

Disk drives for data storage originally had broad requirements with respect to size or power consumption. However, with the advent of the personal computer the defacto size or form factor for disk drives was established by the space provided in the equipment by the initial user and this tended to be the dimensions of the initial commercially successful product. Subsequent devices of higher performance or storage capability were required to occupy the same space to obtain commercial acceptance. As equipment became more compact, smaller disks and reduced form factors created progressively smaller standard sizes. This has progressed through 5 1/4, 3 1/2 and 2 1/2 inch disk sizes.

Within the form factor dimensions it has been necessary to optimise the use of space. To increase the storage density the number of disks must be maximised to achieve the optimum number of data surfaces. The electronics consequently occupies the space not required for the head-disk assembly (HDA).

Originally a single circuit card was used to provide the most economical design. However, when the HDA consumed the entire vertical height of the form factor it was necessary to have electrical components occupy the available residual volumes. Such a design is shown in US-A-5 038 239 which uses multiple cards, components mounted on flexible cable and motor driven heat dissipation and isolation provided by using portions of the unit frame.

An alternative packaging arrangement disclosed in US-A-4825316 comprises a two-sided printed circuit board which forms the base of the disk drive enclosure. Circuit parts and elements are formed on both sides of the circuit board.

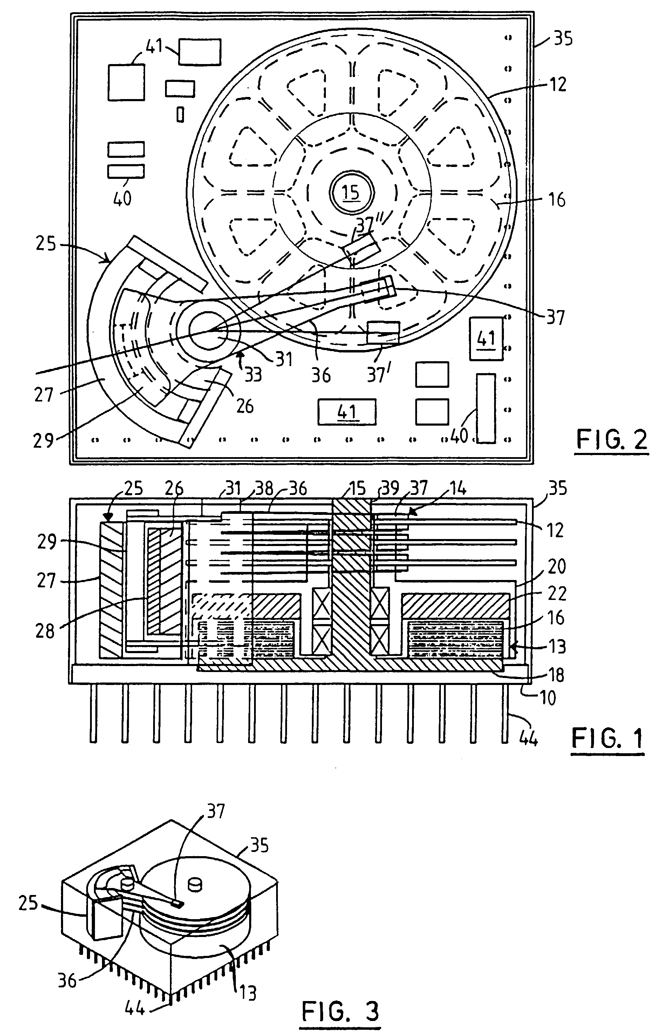

EP-A-0 298 748 discloses a disc drive in a closed housing mounted on a separate PC-board. The board contains a number of what is called "taller electrical parts", one of them appearing to be, according to Fig. 1, a pin connector, presumably cooperating with a socket in the external circuitry. This pin connector is mounted at the edge of the same side of the PC-board on which the other electrical parts are mounted.

As devices became portable and utilised battery power, minimal system power consumption became an objective. Electronic circuitry consumed little power, but any function involving illumination or the driving of mechanical parts became the object of power conservation to reduce battery size and weight and/or extend the period of battery operation without recharging or replacement.

### DISCLOSURE OF THE INVENTION

One aspect of the invention provides a disk storage apparatus for mounting in a pin-receiving socket member comprising a disk spindle assembly and a transducer-carrying actuator assembly, a multilayer substrate onto an upper surface of which said assemblies are mounted, electronic circuit control means directly attached to said upper surface for controlling the actuator and spindle assemblies and electrically connected thereto by means of conductive signal paths defined in or on said substrate, and a plurality of pins secured at and extending from a lower surface of said substrate and arranged in a pattern to be received by said socket member.

Thus in the disk drive of the present invention the drive base is provided by an electronic module substrate that supports the disk spindle assembly and the transducer carrying actuator mechanism. The electronic circuitry for controlling drive functions is carried out by the substrate and may be partially integrated into the multi-layer substrate. A cover encloses the head-disk assembly.

A standard 36 mm square ceramic substrate for an electronic module carries a spindle motor on which a series of disks are mounted about the common axis. A transducer carrying actuator is also mounted on the substrate and includes a voice coil motor for moving the transducers respectively from one concentric track to another. Mounting some discrete components and the VLSI chips on the standard ceramic substrate by direct chip attach methods simplifies the electronic circuitry by eliminating one packaging level. This process which uses proven fabrication techniques, is also more economical and more reliable. The head-disk enclosure is mounted to a planar board in a standard socket to permit easy insertion and removal, particularly when such devices are used in clustered applications.

Using a disk of approximately 1 inch diameter, the head disk assembly is fabricated on a standard module substrate within a height of 15 mm exclusive of the connector pins extending from the assembly.

The invention will now be described by way of example only, with reference to the accompanying drawings.

### BRIEF DESCRIPTION OF THE DRAWINGS

Fig. 1 is a side elevation, partly in section, showing a disk drive according to the present invention;
Fig. 2 is a plan view of the disk drive of Fig. 1 with portions of the spindle and voice coil motors shown in phantom view;
Fig. 3 is an isometric view of the disk drive of Fig. 1 showing the spindle and actuator assemblies within the enclosure;

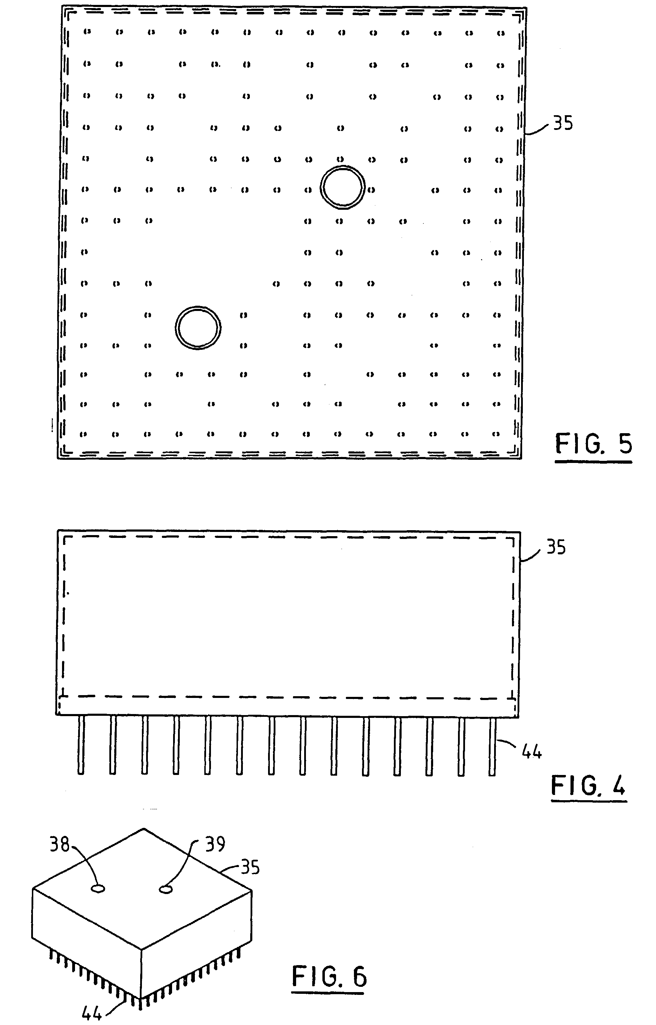

Figs. 4, 5 and 6 are respectively the same views as Figs. 1, 2 and 3 with the cover installed and some cover and base concealed portions shown in phantom view;
Fig. 7 shows a series of drives as shown in Figs. 1-6 mounted on a planar board via sockets carried by the board.

### DETAILED DESCRIPTION OF THE INVENTION

Referring to Fig. 1, the magnetic disk drive of this invention uses a standard 36 mm by 36 mm multilayer ceramic (MLC) module substrate as the base 10. Both the electrical components and the mechanical components are mounted to this common base structure. The disk drive includes a plurality of data storage disks 12 which have a nominal diameter of 26 mm and a .381 mm thickness.

The disks are mounted on a spindle assembly 14 and driven by a flat coil pancake type DC brushless motor 13, which includes a spindle shaft 15 that is secured to base 10. Spindle motor 13 includes flat coils 16, stationary core portion 18, a rotary core portion 20 which is a part of the spindle assembly 14 and a ring shaped permanent magnet 22 which rotates in unison with core portion 20. The shaft 15 and stationary core 18 are formed as a single part. Actuator 25 (Figs. 1 and 2) is a rotary voice coil type using a fixed pole piece assembly including a magnetically permeable inner core 26, a magnetically permeable outer core 27 and two permanent magnets 28 which cooperate to form a working gap in which a voice coil 29 moves. The actuator shaft 31 is fixed to base 10. The transducer support assembly 33 is mounted for rotation about shaft 31 and includes the arms that support the transducers 37 mounted at one side of the axis of rotation and voice coil 29 at the opposite side of the axis. Reference numeral 37′ illustrates the location of transducer 37 when moved by actuator 25 to the outermost data track and transducer 37˝ illustrates the location of transducer 37 when positioned at the innermost data track.

The base structure cooperates with a metal cap 35 which provides both a sealed enclosure surrounding the actuator and disk assemblies to isolate these components from contamination and apertures 38, 39 which surround and capture the tops of the spindle shaft 15 and actuator shaft 31 to afford double ended support for the shafts and continuing precision spacing therebetween. The disk drive module is shown in assembled form in Fig. 3.

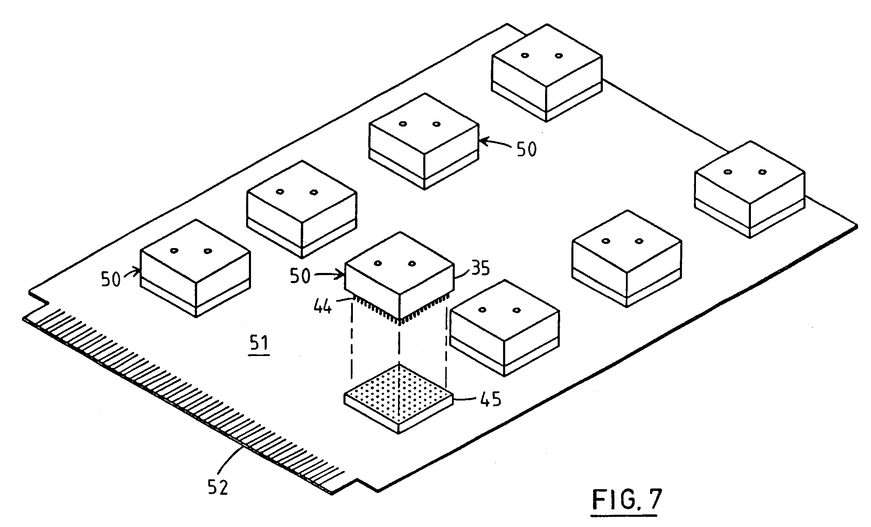

The electronic functions for controlling the disk drive are performed by components 40 and VLSI chips 41 mounted directly to the base structure. The multilayer ceramic base eliminates the need for first level packages for the very large scale integration (VLSI) chips, since such chips are directly attached to the device base using standard multi chip module fabrication technigues. Other electrical functions are integrated into the multilayer ceramic module substrate 10 that also functions as the base for supporting the drive assemblies. External connections for electrical signals between the disk drive and the using system are effected through the standard pins 44 associated with the ceramic substrate 10 which are received in sockets 45 (Fig. 7).

Fig. 7 illustrates an environment wherein a series of eight disk drives 50 are mounted on a card 51 which connects the clustered drives to the using system through the edge connector 52.

## Claims

1. A disk storage apparatus for mounting in a pin-receiving socket member (45) comprising a disk spindle assembly (14) and a transducer-carrying actuator assembly (25), a multilayer substrate (10) onto an upper surface of which said assemblies are mounted, electronic circuit control means (40, 41) directly attached to said upper surface for controlling the actuator and spindle assemblies and electrically connected thereto by means of conductive signal paths defined in or on said substrate, and a plurality of pins (44) secured at and extending from a lower surface of said substrate and arranged in a pattern to be received by said socket member.

2. A disk storage apparatus as claimed in claim 1 further comprising a cover (35) mounted on the substrate which cooperates therewith to enclose the disk spindle and actuator assemblies.

3. A disk storage apparatus as claimed in claim 1 or claim 2 wherein the spindle assembly and the actuator assembly rotate about stationary shafts (15, 31) mounted on said substrate.

4. A disk storage apparatus as claimed in claim 3 as dependent on claim 2 wherein the cover is secured to the distal ends of the shafts about which the spindle and actuator assemblies are rotated.

5. A disk storage apparatus as claimed in any preceding claim wherein said substrate is a multilayer ceramic substrate within which are integrated portions of said control means.

6. A disk storage apparatus as claimed in any preceding claim wherein said substrate is a multilayer ceramic module substrate, said control means including at least one very large scale integration (VLSI) chip directly mounted on said substrate.

## Patentansprüche

1. Ein Plattenspeichergerät zur Montage in einem Stiftaufnahme-Sockelelement (45), umfassend eine Plattendrehachseneinheit (14) und eine Zugriffsarmeinheit mit einem Wandler (25), ein mehrschichtiges Substrat (10), bei dem auf einer oberen Fläche die genannten Einheiten montiert sind, direkt an der genannten oberen Fläche angebrachte Steuermittel mit elektronischer Schaltung (40, 41), zum Steuern der Zugriffsarm- und der Drehachseneinheit, und elektrisch mit diesen über in oder auf dem genannten Substrat festgelegte leitfähige Signalwege verbunden, und eine Vielzahl von Stiften (44), die an einer unteren Fläche des genannten Substrats befestigt sind und von dieser ausgehen und in einem Muster angeordnet sind, so daß sie von dem genannten Sockelelement aufgenommen werden können.

2. Ein Plattenspeichergerät nach Anspruch 1, weiter umfassend eine auf dem Substrat montierte, mit diesem zusammenarbeitende Abdeckung (35), um die Plattendrehachseneinheit und die Zugriffsarmeinheit darin einzuschließen.

3. Ein Plattenspeichergerät nach Anspruch 1 oder Anspruch 2, bei dem die Drehachseneinheit und die Zugriffsarm-Einheit um feststehende, auf dem genannten Substrat montierte Wellen drehbar sind (15, 31).

4. Ein Plattenspeichergerät nach Anspruch 3 in Abhängigkeit von Anspruch 2, bei dem die Abdeckung an den distalen Enden der Wellen, um die sich die Drehachseneinheit und die Zugriffsarmeinheit drehen, befestigt ist.

5. Ein Plattenspeichergerät nach einem jeden vorangehenden Anspruch, bei dem das genannte Substrat ein mehrschichtiges keramisches Substrat ist, in das Teile des genannten Steuermittels integriert sind.

6. Ein Plattenspeichergerät nach einem jeden vorangehenden Anspruch, bei dem das genannte Substrat ein mehrschichtiges, aus einzelnen Modulen bestehendes keramisches Substrat ist, wobei das genannte Steuermittel mindestens einen hochintegrierten (VLSI) Chip enthält, der direkt auf dem genannten Substrat montiert ist.

## Revendications

1. Un dispositif de mémoire à disques destiné à être monté sur un élément femelle (45) destiné recevoir des broches, comprenant un ensemble de broches de disque (14) et un ensemble d'actionneurs-transducteurs (25), un substrat multicouche (10), sur une surface supérieure duquel sont montés lesdits ensembles, un moyen de commande de circuit électronique (40, 41) fixé directement à ladite surface supérieure pour contrôler/commander l'actionneur et les ensembles de broches et leur étant reliés électriquement au moyen de chemins conducteurs de signaux définis dans ou sur ledit substrat et une pluralité de broches (44) fixées sur et s'étendant depuis la surface inférieure de chaque substrat et agencées selon un motif pour être logées par ledit organe femelle.

2. Un dispositif de mémoire à disques selon la revendication 1, comprenant en outre un couvercle (35) monté sur le substrat et coopérant avec lui afin d'enclore la broche de disque et les ensembles actionneurs.

3. Un dispositif de mémoire à disques selon la revendication 1 ou la revendication 2, dans lequel l'ensemble de broches et l'ensemble actionneur tourne autour d'arbres (15, 31) stationnaires montés sur ledit substrat.

4. Un dispositif de mémoire à disques selon la revendication 3 dépendamment de la revendication dans lequel le couvercle est fixé aux extrémités distales des arbres autour desquels tournent les ensembles de broches et d'actionneurs.

5. Un dispositif de mémoire à disques selon l'une quelconque des revendications précédentes, dans lequel ledit substrat est un substrat céramique multicouche dans lequel sont intégrées des parties desdits moyens de commande/contrôle.

6. Un dispositif de mémoire à disques selon l'une des revendications précédentes, dans lequel ledit substrat est un substrat modulaire céramique multicouche, ledit moyen de commande/contrôle comprenant au moins une puce électronique à intégration poussée (VLSI) montée directement sur ledit substrat.
